# EUROPEAN PATENT APPLICATION

(11) **EP 2 314 161 A1**
(43) Date of publication of application: **27.04.2011**
(21) Application number: 10176978.4
(22) Date of filing: 26.08.2008
(51) Int. Cl.: A01N 25/04, A01N 25/12, A01N 51/00, A01M 1/00, A01P 7/04

(54) **Controlled-release insecticidal formulations**

(30) Priority: 20.09.2007 US 994559 P
(62) Divisional of application: 08831676.5
(71) Applicant: Bayer Cropscience LP, Research Triangle Park, NC 27709 (US)
(72) Inventor: Royalty, Reed, Nathan, Davis, California 95616 (US); Fish, James, Raleigh, NC 27606 (US); James, Brian, Camden, MO 64017 (US)
(74) Representative: Bader, Axel Jochen

(57) **Abstract**

The present invention relates generally to a method of applying insecticidal formulations, and particularly those insecticides that are agonists or antagonists of nicotinergic acetylcholine receptors, and still more particularly, imidacloprid, and to a method and apparatus for point sourcing the same.

## Description

### BACKGROUND OF THE INVENTION

### 1. Field of the Invention

The present invention relates generally to a method of applying insecticidal formulations, comprising one or more insecticidally active ingredients, particularly those insecticides where the insecticidally active ingredient is an agonist or antagonist of nicotinergic acetylcholine receptors, and still more particularly, insecticidal formulations of the class known as chloronicotinyls or neonicotinoids, and more particularly still, comprising imidacloprid.

### 2. Description of the Current Technology

Insecticidally active ingredients are typically formulated with other materials, such as surfactants, extenders and the like, to create insecticidal formulations which are then applied in various manners to various surfaces for control of insects.

The precise make of the formulation can be as important as the active ingredient itself. For example, certain formulations may be susceptible to separation when stored for long periods of time. Such separation of the components may require agitation with costly equipment requiring expenditure of time and/or money or other methods to remix the components of the formulation. Therefore a formulation which resists such separation is useful.

Much experimentation and research is done in the industry on an on-going basis in order to develop useful formulations. Much money, time and effort is expended search for such formulations, and it is not always easy to predict which formulations will be successful for their intended purpose and which will not.

A class of compounds known as agonists or antagonists of acetylcholine receptors has been very effective at controlling a wide range of insects, and one of the most notable members of this class of compounds is imidacloprid.

Where for example, the imidacloprid is applied to a surface such as the ground, while imidacloprid's leaching characteristics through soil or other medium have been such that it has been able to gain widespread use and acceptance, it is desirable in certain applications to have even tighter control over the leaching characteristics of an insecticidal formulation having imidacloprid as its active ingredient.

Where for example, the imidacloprid is embedded within and/or with on one or more surfaces of a substrate, it is desirable to control the ability of the imidacloprid to leach from such substrate into the soil or other environment surrounding the site where the imidacloprid has been employed.

Thus, a need exists in the art for formulations of insecticides generally, and imidacloprid in particular, where the leaching characteristics of the insecticide are well controlled.

### SUMMARY OF THE INVENTION

The present invention is directed to insecticidal formulations comprising one or more insecticidally active ingredients where the release of the insecticidal formulation is controlled. The present invention is particularly directed to insecticides that include as the insecticidally active ingredient agonists or antagonists of nicotinergic acetylcholine receptors, and still more particularly, to insecticidal formulations comprising imidacloprid. The present invention is also directed to such insecticidal formulations in the form of a point source, such point sources including but not limited to a gel, a tablet, a granule and the use of those forms alone or in combination with one or more of each other. The present invention is also directed to the combination of such insecticidally active ingredients in a point source form with one or more other active or inactive ingredients as discussed in more detail below. As additional active ingredient, the present invention contemplates but is not limited to, other insecticides, attractants, sterilizing agents, acaricides, nematicides, fungicides, growth-regulating substances, fertilizers, herbicides and combinations of the foregoing, as discussed in more detail below. As additional inactive ingredients, the present invention includes but is not limited to extenders and surfactants.

Another aspect according to the present invention provides a method of applying such a point source by pelletizing the insecticide into substantially uniform pellets; providing a dibble with a handle end and a distal working end and a pellet dispensing member attached thereto having a dispensing end adjacent the distal working end; providing pelletized insecticide (with or without additional active ingredients as discussed herein) within the pellet dispensing member; and selectively dispensing the pelletized insecticide from the pellet dispensing member.

While the inventive formulation of the present application has many uses, it is particularly useful to regulate the release of imidacloprid and/or other active insecticidally active ingredients, alone or in combination, in soil in environmentally sensitive areas.

### BRIEF DESCRIPTION OF THE DRAWINGS

Figure 1 is a schematic drawing of a dibble mounted pellet dispensing member in accordance with one aspect of the present invention;
Figures 2a and b are schematic cross sectional views of a dibble mountable pellet dispensing member is accordance with another aspect of the present invention with figure 2a shown a loaded, stored position and figure 2b showing a unit dosage dispensing position; and
Figures 3a and b are schematic cross sectional views of a dibble mountable pellet dispensing member is accordance with another aspect of the present invention with figure 3a shown a loaded, stored position and figure 3b showing a unit dosage dispensing position,
Figs 4 through 8 are a series of graphs of the imidacloprid concentration (in ppb along the Y axis) versus days after application (X axis) as measured at a depth of 5 cm (Line A), 10 cm (Line B), and 25 cm (Line C). Fig. 4 is directed to the 30% gel formulation, Fig. 5 is directed to the 40% gel formulation, Fig. 6 is directed to the 70% granule formulation and Fig. 7 is directed to the 5% tablet formulation. Fig. 8 is directed to a Simulated Kioritz delivery which a standard methodology for applying liquid formulations into the soil and/or otherwise make subsurface soil applications of a liquid, around, for example, a tree, shrub or the like.

### DESCRIPTION OF THE PREFERRED EMBODIMENTS

As used herein, all numbers, such as but not limited to dimensions, physical characteristics, processing parameters, quantities of ingredients, reaction conditions, and the like, used in the specification and claims are to be understood as being modified in all instances by the term "about". Accordingly, unless indicated to the contrary, the numerical values set forth in the following specification and claims may vary depending upon the desired properties sought to be obtained by the present invention. At the very least, and not as an attempt to limit the application of the doctrine of equivalents to the scope of the claims, each numerical value should at least be construed in light of the number of reported significant digits and by applying ordinary rounding techniques. Moreover, all ranges disclosed herein are to be understood to encompass the beginning and ending range values and any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more and ending with a maximum value of 10 or less, e.g., 1 to 3.5, 5.5 to 10, 2.3 to 7.3, etc. All references and publications referred to herein, such as but not limited to U.S. patents and published applications, are to be understood as being herein incorporated by reference in their entirety.

In the following discussion, imidacloprid will be discussed as a representative member of the class of insecticidal compounds known as agonists or antagonists of nicotinergic acetylcholine receptors. It is to be understood that herein imidacloprid is referred to as a convenience and that unless otherwise indicated from the text, the discussions relating to imidacloprid will apply to other insecticidally active ingredients and combinations thereof as well.

Imidacloprid was developed by Bayer AG, and one of its principal patents directed to imidacloprid is U.S. Patent No. 4,742,060, which is hereby incorporated herein in its entirety by reference. Imidacloprid is sold and/or distributed by Bayer CropScience, LP of Research Triangle Park, North Carolina. In certain formulations it is available under the trademark "Merit®" from Bayer CropScience, LP.

It is known to apply imidacloprid in a liquid form as a liquid drench on and/or around living or non-living surfaces for the control of insects. For example, imidacloprid may be applied as a liquid drench on or about crops to control insects that would attack such crops. Imidacloprid may be applied as a liquid drench on or about structures, e.g. homes, buildings, dimensional lumber etc., to control insects and prevent or minimize insects from damaging such structures. It may also be applied as a drench on or about non-crop plants such as trees, shrubs and ornamental plants to control insects that would attack such trees, shrubs and/or ornamental plants.

But applying imidacloprid as a liquid drench has certain limitations, including for example, the need to transport and have available liquid formulations of imidacloprid for such uses. Also, while the leaching characteristics of imidacloprid are such that it has helped to permit imidacloprid to become one of the most widespread insecticidally active agents, it would be desirable to have even more control over such leaching characteristics.

The present inventors have found that point sources of imidacloprid provide such additional control, and are particularly useful when treating certain items such as a plant, shrub and/or ornamental plant. The term "point source" as used herein is not precisely defined, but is used in contrast at least to liquid drench applications of imidacloprid.

Point sources include but are not limited to formulations of imidacloprid in gel, granule or tablet forms, which the present inventors have demonstrated below to provide even more control of the leaching characteristics of imidacloprid in soil or other media. Thus, in the context of the present invention, particularly preferred point sources of imidacloprid include imidacloprid in the form of a gel, a tablet or a granule containing imidacloprid alone and/or in combination with other insecticidally, herbicidally, fungicidally or otherwise active ingredients. It is particularly preferred that the leaching of the insecticidally active ingredient(s) from such a point source are controlled.
As may be readily apparent, there are several advantages associated with a controlled release point source of insecticidally active formulations, such as imidacloprid.

One is the ease of application of such a point source. In the case of a tree, bush, shrub or other ornamental plant, the imidacloprid is simply placed on or within the soil or other locus surrounding the plant. There is no need then for having water available for mixing with the active ingredient to dilute it, for example, before it is applied. Water or other moisture is however, associated with the point source, such as watering by hand or machine or natural watering or combinations thereof to controllably release the active ingredient from the point source. The moisture releases the active ingredient from the point source which then operates to control insects at or about the locus of the tree, bush, shrub or other ornamental plant.

A second is the precision of placement application. Utilization of the point source allows for precise placement of the insecticide where it will provide the best results while avoiding the release of insecticide to areas where it is not needed.

A third is the control of dosage, particularly in comparison to a drench method. While a drench method could conceivably be closely monitored to control dosage, practically speaking this is not done on a regular basis other than, for example, testing or other directed purposes. Utilization of a point source overcomes this limitation by allowing a precisely metered amount of the insecticide to be applied to the precise location where it is needed. It puts exactly the right amount of active ingredient at exactly the place where it is needed.

A fourth is the reduced cost of storage and transportation. Fully formulated liquid compositions inherently require shipment and storage of a large quantity of liquid. Concentrated formulations help reduce that problem but still at the point of application, more liquid must be readily available to dilute the concentrated solution of insecticide for use. In contrast, point source insecticidal formulations of the gel, granule or tablet form inherently have little or no water in comparison to liquid formulations of insecticides, and their storage and shipment is then inherently easier and less expensive.

A fifth is reduced chance for separation of components. One problem long plaguing liquid formulations are that its components often separate during storage. While in some instances like a small bottle, this simply means shaking the bottle to return the components to their unseparated state, this is not always so easy, as for example, where the storage container is a railroad tanker or other large storage area. Point sources of the gel, granule or tablet are not susceptible to such phase separation, providing a significant advantage in that regard.

A sixth is the controlled release of active ingredient which prevents undesirable leaching or other of target movement of the active ingredient in the soil away from the point source, which point source may be at near or around, for example, a tree, shrub, bush or the like. The controlled release is a function of the initial absence of water and the surface area to volume ratio of the point source which forces the active ingredient to controllably erode off of the surface of the point source. The hardness and permeability of the tablet also function to effect a controlled release of the active ingredient from the pellet. One skilled in the art can control these properties to effect a desired rate of release.

### Pellets

In accordance with the present invention, the insertion or application of that point source of insecticide as a pellet is particularly useful. Pelletizing within the meaning of the present application references forming the subject material into pellets. The term pellet within the meaning of this application is a preformed and shaped material having relatively uniform dimensions in a given lot, and holding this form until application of the pellet, such as directly to the soil.

The shape of the pellets is not limiting to the present invention, and the pellets can be cylindrical, spherical or any other shape. The size of the pellets is also not limiting to the present invention, and they can be of any size that can be practically applied. However, pellets in the range of about 0.5 grams to 20 grams would certainly be contemplated as within the scope of the present invention. Where the pellets are spherical or substantially spherical, pellets having such a weight be having a diameter in the range of about 2 mm to about 5 cm would be contemplated as within the scope of the present invention. In one embodiment, a spherical pellet was used that was in the range of about 1.5 cm in diameter and about 2.5 grams in weight. The range of percentage of active ingredient in each pellet as contemplated within the scope of the present invention can be is in the range of about 0.1 % to 100%, preferably about 0.5% to about 80%, and still more preferably, about 2% to about 50%.

Application of the pellet may be performed easily for example with the following device in accordance with the present invention.

Referring now to Fig. 1, there is shown a dibble 12, or dibber, which traditionally is a pointed hand operated wooden tool for making holes in the ground so that seeds or bulbs can be planted. The dibble 12 is the simplest garden tool. Generally, its only job is to poke holes in the dirt. A dibble 12 is good for planting little bulbs, small seedlings or seeds. Dibbles come in a variety of designs including: Straight dibbles, T-Handled dibbles 12 (as shown in figure 1), Trowel dibbles and L-Shaped dibbles. The dibble was first recorded in Roman times and has remained mostly unchanged since. In the eighteenth and nineteenth centuries, farmers would use long handled dibbles of metal or wood to plant crops. One man would walk with a dibble making holes, and a second man would plant seeds in each hole and fill it in. It wasn't until the Renaissance that dibbles became a manufactured item, some made of iron for penetrating harder soils and clay.

The present invention provides a dibble mounted pellet dispensing member 10 in accordance with one aspect of the present invention. The member 10 is secured to a dibble 12 with a handle end 14 and a distal working end 16. The pellet dispensing member 10 is attached thereto in any conventional fashion such as mechanical fasteners and has the dispensing end thereof adjacent the distal working end 16 of the dibble 12. Any conventional dibble 12 may be utilized. The dibble mounted pellet dispensing member 10 and associated dibble 12 are intended to provide an effective and efficient mechanism to quickly and accurately dispense the pellets of insecticide 50 in the desired location. Although a t-handled dibble 12 is shown, the dispensing member 10 according to the present invention will operate with any conventional dibble or similar tool. Essentially the dispensing member 10 and associated dibble 12 allow the operator to quickly dig an appropriately positioned hole generally by impinging the dibble 12 on the ground wherein the distal end will dig an appropriate hole. The dibble 12 may be twisted or leaned back slightly to allow the member 10 to easily dispense the pellets 50 within (or possibly only near) the hole.

One efficient version of the dibble mounted pellet dispensing member 10 provides a funnel type opening 18 at a loading end of the device and an elongated tube 20 extending to the dispensing end of the member 10. This simple effective system provides a hand fed pellet dispensing member which is a gravity feeding dispensing unit. The phrase "gravity feeding dispensing unit" indicates that gravity is used to advance the pellets 50 through the dispensing device. In this embodiment shown in figure 1, single dosages of pellets 50 are provided into the pellet dispensing member 10 with the dibble 12 marking the desired location and possibly forming the desired hole for the pellets. Subsequent dosages of pellets 50 are held by the operator, such as in a seed bag, and are provided to the dispensing member 10 after the dispensing of the prior dosage by the pellet dispensing member 10, and generally after the dibble 12 has been moved to a new location. In other words, as the worker approaches the proper dispensing location and uses the dibble 12 to dig the appropriate or desired hole, the worker adds a single dosage of pellets 50 into the opening 18 which will be properly dispensed through tube 20. The worker can then advance to the next dispersion location. The supply of pellets 50 can be easily stored in a "seed bag" carried by the worker. A single dosage of insecticide may be one or more pellets. Where the pellet includes insecticide and another active ingredient, as for example, a fertilizer, the pellets 50 may be formed for example as an effective mixtures of fertilizer and insecticide, but it is possible to have individual pellets of each wherein the user applies a given number of fertilizer pellets and a given number of insecticide pellets for each application.

Figures 2a and b are schematic cross sectional views of a dibble mountable pellet dispensing member 10 is accordance with another aspect of the present invention. The gravity feeding dispensing unit 10 further includes releasing actuator 22 in the form of a holding pin or gate selectively extending across the tube 20, whereby the selective dispensing of the insecticide pellets 50 from the pellet dispensing member 10 is through actuation of the releasing actuator 22 as shown in figures 2a and 2b. As shown, the releasing actuator 22 further includes a unit dosage measurement mechanism 24, such as a second gate or pin extending at least partially into the tube 20, whereby when the actuator 22 and mechanism 24 are actuated the releasing actuator 22 releases only a single dosage of pellets 50 by having the mechanism 24 engage and hold back any pellets 50 beyond a single dosage amount. The actuator 22 may be provided with a spring 26 biasing the actuator into the closed, non-release position. A pivoted handle 28 connects the actuator 22 and the unit dosage measurement mechanism 24 across a pivot point. The handle 28 serves as an easily accessible trigger mechanism for operating the actuator 22 and mechanism 24 by the operator, as generally shown in figure 2b. The spring 26 may bias the actuator 22 via the handle 28. The actuator 22, if provided allows for supplying multiple dosages of pellets 50 within the pellet dispensing member 10 wherein the pellet dispensing member 10 serves as a hopper for storage of the pellets 50 until the pellets 50 are dispensed. This effectively replaces the need for the seed bag carried by the worker and can make the process easier on the worker while still providing a very low cost application system.

As noted above a single dosage of insecticide may be more than one pellets 50. Figures 3 a and b show the actuator 22 designed for dosage amounts that comprise a plurality of pellets 50.

The disclosed embodiments are illustrative of the present invention and not intended to be restrictive thereof. Various modifications may be made to the present invention without departing from the spirit and scope thereof. For example the mechanism 24 may be adjustable to alter the dosage that is dispensed with each actuation via attaching the mechanism 24 to one of a plurality of locations along the handle 28. The pins forming actuator 22 and mechanism 24 may be operated electrically or magnetically. Many alternatives are possible while still providing a low cost effective dispensing system.

When used to treat a tree, bush, shrub or similar plant, the pellet can be applied at the soil surface, below the soil surface, and any combinations thereof.

### Gel

In accordance with the present invention, the insertion or application of that point source of insecticide as a gel is also particularly useful. Gelling within the meaning of the present application references forming the subject material into a gel or gel like form or formulation. The term gel within the meaning of this application is not precisely defined but refers to the term gel as it is broadly understood. That is to say having the characteristics of having a solid or semi-solid shaped or shapable form, and is often metered or dispensed by squeezing or apply pressure to the container and having the material dispensed from an orifice in the container. One of the advantages of a gel is metering, that is to say the dose or size of the point source application can be very easily controlled by controlling the amount of material dispensed.

The shape and amount of gel dispensed is not limiting to the present invention, and it can be of any size or shape that can be practically applied. However, gel applied in dosages in the range of about 1 mg to 500 grams would certainly be contemplated as within the scope of the present invention, preferably in the range of about 10 mg to about 200 grams, and still more preferably about 100 mg to about 50 grams. The range of percentage of active ingredient in the gel as contemplated within the scope of the present invention can be is in the range of about 0.01 % to 100%, preferably about 0.1 % to about 80%, and still more preferably, about 1% to about 50%.

Application of the gel may be performed easily for example with a caulking gun, syringe, spatula, toothpaste-type tube or any gel applications known in the art.

When used to treat a tree, bush, shrub or similar plant, the gel can be applied at the soil surface, below the soil surface, on the plant itself or any combinations thereof.

### Granule

In accordance with the present invention, the insertion or application of the point source of insecticide as a granule is also particularly useful. A granule within the meaning of the present application includes for example, the typical water dispersable granule known in the art. But such granules have heretofore not been used as a point source. They have instead been mixed in liquid, dissolved and then are sprayed as a drench or foliar. In accordance with the present invention, such granules are applied in their solid/dry state, at or about a tree, bush, shrub or other plant and are used as a point source of active ingredient.

The shape of the granule is not limiting to the present invention, and the granules can be cylindrical, spherical or any other shape. The size of the granules is also not limiting to the present invention, and they can be of any size that can be practically applied. However, granules in the range of about 1 mg to 20 grams would certainly be contemplated as within the scope of the present invention. Where the granules are spherical or substantially spherical, pellets having such a weight be having a diameter in the range of about .1 mm to about 5 cm would be contemplated as within the scope of the present invention. The range of percentage of active ingredient in each pellet as contemplated within the scope of the present invention can be is in the range of about 0.1 % to 100%, preferably about 1% to about 90%, and still more preferably, about 5% to about 85%.

Application of the granule may be performed with a spatula, puffer or any other dispensing means, particularly those with metered dispensing means. Gravity fed, pressure, and/or air assisted devices are all within the scope of the present invention.

Where used to treat a tree, bush, shrub or other plant, the granules can be applied on the soil surface, below the soil surface to plant, and any combinations thereof.

### The Insecticide

Turning now to the insecticide, the active compound mixtures according to the invention can include any insecticidally active agent (and/or other active compounds as described herein) provided the desired active ingredient or its combination provides the desired leaching effect for the application where it is being used and control of the insects sought to be controlled. Such active ingredients in accordance with the present invention include any commercially available formulation that meets these parameters, and in use forms prepared from these formulations. The formulations typically comprise between 0.1 and 95 per cent by weight of active compound composition, preferably between 0.5 and 90%. Suitable insecticidal compounds include insecticides, alone or in combination with other insecticidal and/or acaricidal and/or nematicidal compounds such as the following.

### Insecticides/Acaricides/Nematicides:

abamectin, acephate, acetamiprid, acequinocyl, acrinathrin, alanycarb, aldicarb, aldoxycarb, alpha-cypermethrin, alphamethrin, amitraz, avermectin, AZ 60541, azadirachtin, azamethiphos, azinphos A, azinphos M, azocyclotin,
Bacillus popilliae, Bacillus sphaericus, Bacillus subtilis, Bacillus thuringiensis, baculoviruses, Beauveria bassiana, Beauveria tenella, bendiocarb, benfuracarb, bensultap, benzoximate, betacyfluthrin, bifenazate, bifenthrin, bioethanomethrin, biopermethrin, bistrifluron, BPMC, bromophos A, bufencarb, buprofezin, butathiofos, butocarboxim, butylpyridaben,
cadusafos, carbaryl, carbofuran, carbophenothion, carbosulfan, cartap, chloethocarb, chlorethoxyfos, chlorfenapyr, chlorfenvinphos, chlorfluazuron, chlormephos, chlorpyrifos, chlorpyrifos M, chlovaporthrin, chromafenozide, cis-resmethrin, cispermethrin, clocythrin, cloethocarb, clofentezine, clothianidine, cyanophos, cycloprene, cycloprothrin, cyfluthrin, cyhalothrin, cyhexatin, cypermethrin, cyromazine, chlorantroniliprole,
deltamethrin, demeton M, demeton S, demeton-S-methyl, diafenthiuron, diazinon, dichlorvos, dicofol, diflubenzuron, dimethoate, dimethylvinphos, dinetofuran, diofenolan, disulfoton, docusat-sodium, dofenapyn,
eflusilanate, emamectin, empenthrin, endosulfan, Entomopfthora spp., esfenvalerate, ethiofencarb, ethion, ethiprole, ethoprophos, etofenprox, etoxazole, etrimfos,
fenamiphos, fenazaquin, fenbutatin oxide, fenitrothion, fenothiocarb, fenoxacrim, fenoxycarb, fenpropathrin, fenpyrad, fenpyrithrin, fenpyroximate, fenthion, fenvalerate, fipronil, fluazinam, fluazuron, flubrocythrinate, flucycloxuron, flucythrinate, flufenoxuron, flumethrin, flupyrazofos, flutenzine, fluvalinate, fonophos, fosmethilan, fosthiazate, fubfenprox, furathiocarb,
granulosis viruses,
halofenozide, HCH, heptenophos, hexaflumuron, hexythiazox, hydroprene,
imidacloprid, indoxacarb, isazofos, isofenphos, isoxathion, ivermectin,
nuclear polyhedrosis viruses,
lambda-cyhalothrin, lufenuron,
malathion, mecarbam, metaldehyde, methamidophos, Metharhizium anisopliae, metharhizium flavoviride, methidathion, methiocarb, methoprene, methomyl, methoxyfenozide, metolcarb, metoxadiazone, mevinphos, milbemectin, milbemycin, monocrotophos,
naled, nitenpyram, nithiazine, novaluron,
omethoate, oxamyl, oxydemethon M,
Paecilomyces fumosoroseus, parathion A, parathion M, permethrin, phenthoate, phorate, phosalone, phosmet, phosphamidon, phoxim, pirimicarb, pirimiphos A, pirimiphos M, profenofos, promecarb, propargite, propoxur, prothiofos, prothoate, pymetrozine, pyraclofos, pyresmethrin, pyrethrum, pyridaben, pyridathion, pyrimidifen, pyriproxyfen,
quinalphos,
ribavirin,
salithion, sebufos, silafluofen, spinosad, spirodiclofen, sulfotep, sulprofos, spirotetramat, sproacsifien,
tau-fluvalinate, tebufenozide, tebufenpyrad, tebupirimiphos, teflubenzuron, tefluthrin, temephos, temivinphos, terbufos, tetrachlorvinphos, tetradifon, theta-cypermethrin, thiacloprid, thiamethoxam, thiapronil, thiatriphos, thiocyclam hydrogen oxalate, thiodicarb, thiofanox, thuringiensin, tralocythrin, tralomethrin, triarathene, triazamate, triazophos, triazuron, trichlophenidine, trichlorfon, triflumuron, trimethacarb,
vamidothion, vaniliprole, Verticillium lecanii,
YI 5302, zeta-cypermethrin, zolaprofos,
(1R-cis)-[5-(phenylmethyl)-3-furanyl]-methyl-3-[(dihydro-2-oxo-3(2H)-furan- ylidene)-methyl]-2,2-dimethylcyclopropanecarboxylate, (3-phenoxyphenyl)-methyl-2,2,3,3-tetramethylcyclopropanecarboxylate,
1-[(2-chloro-5-thiazolyl)methyl]tetrahydro-3,5-dimethyl-N-nitro-1,3,5-tria- zine-2(1H)-imine,
2-(2-chloro-6-fluorophenyl)-4-[4-(1,1-dimethylethyl)phenyl]-4,5-dihydro-ox- azole,
2-(acetyloxy)-3-dodecyl-1,4-naphthalenedione,
2-chloro-N-[[[4-(1-phenylethoxy)-phenyl]-amino]-carbonyl]-benzamide,
2-chloro-N-[[[4-(2,2-dichloro-1,1-difluoroethoxy)-phenyl]-amino]-carbonyl]- - benzamide,
3-methylphenyl propylcarbamate,
4-[4-(4-ethoxyphenyl)-4-methylpentyl]-1-fluoro-2-phenoxybenzene,
4-chloro-2-(1,1-dimethylethyl)-5-[[2-(2,6-dimethyl-4-phenoxyphenoxy)ethyl]- thio]-3(2H)-pyridazinone,
4-chloro-2-(2-chloro-2-methylpropyl)-5-[(6-iodo-3-pyridinyl)methoxy]-3(2H)- - pyridazinone,
4-chloro-5-[(6-chloro-3-pyridinyl)methoxy]-2-(3,4-dichlorophenyl)-3(2H)-pyridazinone,
Bacillus thuringiensis strain EG-2348,
[2-benzoyl-1-(1,1-dimethylethyl)-hydrazinobenzoic acid,
2,2-dimethyl-3-(2,4-dichlorophenyl)-2-oxo-1-oxaspiro[4.5]dec-3-en-4-yl butanoate, [3-[(6-chloro-3-pyridinyl)methyl]-2-thiazolidinylidene]-cyanamide,
dihydro-2-(nitromethylene)-2H-1,3-thiazine-3(4H)-carboxaldehyde,
ethyl [2-[[1,6-dihydro-6-oxo-1-(phenylmethyl)-4-pyridazinyl]oxy]ethyl]-car- bamate,
N-(3,4,4-trifluoro-1-oxo-3-butenyl)-glycine,
N-(4-chlorophenyl)-3-[4-(difluoromethoxy)phenyl]-4,5-dihydro-4-phenyl-1H-p- yrazole-1-carboxamide,
N-[(2-chloro-5-thiazolyl)methyl]-N'-methyl-N"-nitro-guanidine,
N-methyl-N'-(1-methyl-2-propenyl)-1,2-hydrazinedicarbothioamide,
N-methyl-N'-2-propenyl-1,2-hydrazinedicarbothioamide,
O,O-diethyl-[2-(dipropylamino)-2-oxoethyl]-ethylphosphoramidothioate,
N-cyanomethyl-4-trifluoromethyl-nicotinamide,
3,5-dichloro-1-(3,3-dichloro-2-propenyloxy)-4-[3-(5-trifluoromethylpyridin- -2-yloxy)-propoxy]-benzene,
and combinations thereof.

Insecticides may include, but are not limited to for example, phosphates, carbamates, carboxylates, chlorinated hydrocarbons, pyrethroids, phenylureas and substances produced by microorganisms, inter alia.

### Formulation of the Insecticidally Active Ingredient Composition

The insecticidally active ingredient in accordance with the present invention can be prepared in a known manner, for example by mixing the active compounds with extenders, that is, liquid solvents, pressurized liquefied gases and/or solid carriers, optionally with the use of surface-active agents, that is, emulsifying agents and/or dispersing agents, or other agents. In the case of the use of water as an extender, organic solvents can, for example, also be used as auxiliary solvents.

As liquid solvents, there are suitable in the main: aromatics, such as xylene, toluene or alkylnaphthalenes, chlorinated aromatics or chlorinated aliphatic hydrocarbons, such as chlorobenzenes, chloroethylenes or methylene chloride, aliphatic hydrocarbons, such as cyclohexane or paraffins, for example mineral oil fractions, alcohols, such as butanol or glycol as well as their ethers and esters, ketones, such as acetone, methyl ethyl ketone, methyl isobutyl ketone or cyclohexanone, strongly polar solvents, such as dimethylformamide and dimethyl sulphoxide, as well as water;
as solid carriers there are suitable: for example ground natural minerals, such as kaolins, clays, talc, chalk, quartz, attapulgite, montmorillonite or diatomaceous earth, and ground synthetic minerals, such as finely divided silica, alumina and silicates;
as solid carriers for granules there are suitable: for example crushed and fractionated natural rocks such as calcite, marble, pumice, sepiolite and dolomite, as well as synthetic granules of inorganic and organic meals, and granules of organic material such as sawdust, coconut shells, maize cobs and tobacco stalks;
as emulsifying agents there are suitable: for example nonionic and anionic emulsifiers, such as polyoxyethylene fatty acid esters, polyoxyethylene fatty alcohol ethers, for example alkylaryl polyglycol ethers, alkylsulphonates, alkyl sulphates, arylsulphonates as well as protein hydrolysates
as dispersing agents there are suitable: for example lignin-sulphite waste liquors and methylcellulose.

Adhesives such as carboxy-methylcellulose and natural and synthetic polymers in the form of powders, granules or eustria, such as gum eustr, polyvinyl alcohol and polyvinyl acetate, as well as natural phospholipids, such as cephalins and lecithins, and synthetic phospholipids, can be used in the formulations. Further additives may be mineral and vegetable oils.

It is possible to use colorants such as inorganic pigments, for example iron oxide, titanium oxide and Prussian Blue, and organic dyestuffs, such as alizarin dyestuffs, azo dyestuffs and metal phthalocyanine dyestuffs, and trace nutrients such as salts of iron, manganese, boron, copper, cobalt, molybdenum and zinc.

### Additional Active Ingredients:

As noted above, the insecticidally active ingredient may be admixed or otherwise combined with other active or inactive additional compounds. Such combinations may provide certain advantages, such as, without limitation, exhibiting synergistic effects for greater control of insect pests, reducing rates of application of insecticide thereby minimizing any impact to the environment and to worker safety, controlling a broader spectrum of insect pests, safening of crop plants to phytotoxicity, and improving tolerance by non-pest species, such as mammals and fish.

Additional compounds include, without limitation, other pesticides including but not limited to insecticides, plant growth regulators, fertilizers, soil conditioners, attractants, sterilizing agents, fungicides, herbicides, safeners and combinations of the foregoing and/or other agricultural chemicals.

When the active insecticidal compounds of the present invention are used in combination with one or more of additional compounds, e.g., with other pesticides such as herbicides, the herbicides include, without limitation, for example: N-(phosphonomethyl)glycine ("glyphosate"); aryloxyalkanoic acids such as (2,4-dichlorophenoxy)acetic acid ("2,4-D"), (4-chloro-2-methylphenoxy)acetic acid ("MCPA"), (+/-)-2-(4chloro-2-methylphenoxy)propanoic acid ("MCPP"); ureas such as N,N-dimethyl-N'-[4-(1-methylethyl)phenyl]urea ("isoproturon"); imidazolinones such as 2-[4,5-dihydro-4-methyl-4-(1-methylethyl)-5-oxo-1H-imidazol-2-yl]-3-pyridinecarboxlic acid ("imazapyr"), a reaction product comprising (+/-)-2-[4,5-dihydro-4-methyl-4-(1-methylethyl)-5-oxo-1H-imidazol-2-yl]-4- -methylbinzoic acid and (+/-)2-[4,5-dihydro-4-methyl-4-(1-methylethyl)-5-oxo-1H-imidazol-2-yl]-5m- ethylbenzoic acid ("imazamethabenz"), (+/-)-2-[4,5-dihydro-4-methyl-4-(1-methylethyl)-5-oxo-1H-imidazol-2-yl]-5- -ethyl-3-pyridincarboxylic acid ("imazethapyr"), and (+/-)-2-[4,5-dihydro-4-methyl-4-(1-methylethyl)-5-oxo-1H-imidazol-2-yl]-3- quinolinecarboxylic acid ("imazaquin"); duogebtk ethers such as 5-[2-chloro-4-(trifluoromethyl)phenoxy]-2-nitrobenzoic acid ("acifluorfen"), methyl 5-(2,4-dichlorophenoxy)-2-nitrobenzoate ("bifenox"), and 5-[2-chloro-4-(trifluoromethyl)phenoxy]-N-(methylsulfonyl)-2-nitrobenzami- de ("fomasafen"); hydroxybenzonitriles such as 4-hydroxy-3,5-diiodobenzonitrile ("ioxynil") and 3,5-dibromo-4-hydroxybenzonitrile ("bromoxynil"); sulfonylureas such as 2-[[[[(4chloro-6-methoxy-2-pyrimidinyl)amino]carbonyl]amino]sulfonyl]benz- oic acid ("chlorimuron"), 2-chloro-N-[[(4-methoxy-6-methyl -1,3,5-triazin-2-yl)amino]carbonyl]benzenesulfonamide (achlorsulfuron"), 2-([[[[[(4,6-dimethoxy-2-pyrimidinyl)amino]carbonyl]amino]sulfonyl]methyl- ]benzoic acid ("bensulfuron"), 2-[[[[(4,6-dimethoxy-2-pyrimidinyl)amino]carbonyl]amino]sulfonyl]-1-methy- 1-1H-pyrazol-4-carboxylic acid ("pyrazosulfuron"), 3-[[[[(4-methoxy-6-methyl-1,3,5-triazin-2-yl)amino]carbonyl]amino]sulfony-1]-2-thiophenecarboxylic acid ("thifensulfuron"), and 2-(2-chloroethoxy)-N[[(4-methoxy-6-methyl-1,3,5-triazin-2-yl)amino]carbonyl]benczenesulfonamide ("triasulfuron"); 2-(4-aryloxy-phenoxy)alkanoic acids such as (+/-)-2[4-[(6-chloro-2-benzoxazolyl)oxy]phenoxy]-propanoic acid (fenoxaprop"), (+/-)-2-[4[[5-(trifluoromethyl)-2-pyridinyl]oxy]-phenoxy]propanoic acid ("fluazifop"), (+/-)-2-[4-(6chloro-2-quinoxalinyl)oxy]-phenoxy]propanoic acid ("quizalofop"), and (+/-)-2-[(2,4-dichlorophenoxy)phenoxy]propanoic acid ("diclofop"); benzothiadiazinones such as 3-(1-methylethyl)-1H-1,2,3-benzothiadiazin-4(3H)-one-2,2-dioxide ("bentazone"); 2-chloroacetanilides such as N-(butoxymethyl)-2-chloro-N-(2,6-diethylphenyl)acetamide ("butachlor"), 2-chloro-N-(2-ethyl-6-methylphenyl)-N-(2-methoxy-1-methylethyl)acetamide ("metolachlor"), 2chloro-N-(ethoxymethyl)-N-(2-ethyl-6-methylphenyl)acetamide ("acetochlor"), and (RS)-2-chloro-N-(2,4-dimethyl-3-thienyl)-N-(2-methoxy-1-methylethyl)aceta- mide ("dimethenamide"); arenecarboxylic acids such as 3,6-dichloro-2-methoxybenzoic acid ("dicamba"); pyridyloxyacetic acids such as [(4-amino-3,5-dichoro-6-fluoro-2-pyridinyl)oxy]acetic acid ("fluroxypyr"), and other herbicides.

When the active insecticidal compounds of the present invention are used in combination with one or more additional compounds, e.g., with other pesticides such as other insecticides, the other insecticides include, for example: organophosphate insecticides, such as chlorpyrifos, diazinon, dimethoate, malathion, parathion-methyl, and terbufos; pyrethroid insecticides, such as fenvalerate, deltamethrin, fenpropathrin, cyfluthrin, flucythrinate, alpha-cypermethrin, bifenthrin, cypermethrin, resolved cyhalothrin, etofenprox, esfenvalerate, tralomehtrin, tefluthrin, cycloprothrin, betacyfluthrin, and acrinathrin; carbamate insecticides, such as aldecarb, carbaryl, carbofuran, and methomyl; organochlorine insecticides, such as endosulfan, endrin, heptachlor, and lindane; benzoylurea insecticides, such as diflubenuron, triflumuron, teflubenzuron, chlorfluazuron, flucycloxuron, hexaflumuron, flufenoxuron, and lufenuron; and other insecticides, such as amitraz, clofentezine, fenpyroximate, hexythiazox, and spinosad.

When the active insecticidal compounds of the present invention are used in combination with one or more additional compounds, e.g., with other pesticides such as fungicides, the fungicides include, for example: benzimidazole fungicides, such as benomyl, carbendazim, thiabendazole, and thiophanate-methyl; 1,2,4-triazole fungicides, such as epoxyconazole, cyproconazole, flusilazole, flutriafol, propiconazole, tebuconazole, triadimefon, and triadimenol; substituted anilide fungicides, such as metalaxyl, oxadixyl, procynudone, and vinclozolin; organophosphorus fungicides, such as fosetyl, iprobenfos, pyrazophos, edifenphos, and tolclofos-methyl; morpholine fungicides, such as fenpropimorph, tridemorph, and dodemorph; other systemic fungicides, such as fenarimol, imazalil, prochloraz, tricyclazole, and triforine; dithiocarbamate fungicides, such as mancozeb, maneb, propineb, zineb, and ziram; non-systemic fungicides, such as chlorothalonil, dichlofluanid, dithianon, and iprodione, captan, dinocap, dodine, fluazinam, gluazatine, PCNB, pencycuron, quintozene, tricylamide, and validamycin; inorganic fungicides, such as copper and sulphur products, and other fungicides.

When the active insecticidal compounds of the present invention are used in combination with one or more additional compounds, e.g., with other pesticides such as nematicides, the nematicides include, for example: carbofuran, carbosulfan, turbufos, aldicarb, ethoprop, fenamphos, oxamyl, isazofos, cadusafos, and other nematicides.

When the active insecticidal compounds of the present invention are used in combination with one or more additional compounds, e.g., with other materials such as plant growth regulators, the plant growth regulators include, for example: maleic hydrazide, chlormequat, ethephon, gibberellin, mepiquat, thidiazon, inabenfide, triaphenthenol, paclobutrazol, unaconazol, DCPA, prohexadione, trinexapac-ethyl, and other plant growth regulators.

Soil conditioners are materials which, when added to the soil, promote a variety of benefits for the efficacious growth of plants. Soil conditioners are used to reduce soil compaction, promote and increase effectiveness of drainage, improve soil permeability, promote optimum plant nutrient content in the soil, and promote better pesticide and fertilizer incorporation. When the active insecticidal compounds of the present invention are used in combination with one or more additional compounds, e.g., with other materials such as soil conditioners, the soil conditioners include organic matter, such as humus, which promotes retention of cation plant nutrients in the soil; mixtures of cation nutrients, such as calcium, magnesium, potash, sodium, and hydrogen complexes; or microorganism compositions which promote conditions in the soil favorable to plant growth. Such microorganism compositions include, for example, bacillus, pseudomonas, azotobacter, azospirillum, rhizobium, and soil-borne cyanobacteria.

Fertilizers are plant food supplements, which commonly contain nitrogen, phosphorus, and potassium. When the active insecticidal compounds of the present invention are used in combination with one or more additional compounds, e.g., with other materials such as fertilizers, the fertilizers include nitrogen fertilizers, such as ammonium sulfate, ammonium nitrate, and bone meal; phosphate fertilizers, such as superphosphate, triple superphosphate, ammonium sulfate, and diammonium sulfate; and potassium fertilizers, such as muriate of potash, potassium sulfate, and potassium nitrate, and other fertilizers.

Other examples of suitable additional compounds include:

### Fungicides:

aldimorph, ampropylfos, ampropylfos-potassium, andoprim, anilazine, azaconazole, azoxystrobin,
benalaxyl, benodanil, benomyl, benzamacril, benzamacryl-isobutyl, bialaphos, binapacryl, biphenyl, bitertanol, blasticidin-S, bromuconazole, bupirimate, buthiobate, bascalid,
calcium polysulphide, capsimycin, captafol, captan, carbendazim, carboxin, carvon, quinomethionate, chlobenthiazone, chlorfenazole, chloroneb, chloropicrin, chlorothalonil, chlozolinate, clozylacon, cufraneb, cymoxanil, cyproconazole, cyprodinil, cyprofuram,
debacarb, dichlorophen, diclobutrazole, diclofluanid, diclomezine, dicloran, diethofencarb, difenoconazole, dimethirimol, dimethomorph, diniconazole, diniconazole-M, dinocap, diphenylamine, dipyrithione, ditalimfos, dithianon, dodemorph, dodine, drazoxolon,
ediphenphos, epoxiconazole, etaconazole, ethirimol, etridiazole,
famoxadon, fenapanil, fenarimol, fenbuconazole, fenfuram, fenitropan, fenpiclonil, fenpropidin, fenpropimorph, fentin acetate, fentin hydroxide, ferbam, ferimzone, fluazinam, flumetover, fluoromide, fluquinconazole, flurprimidol, flusilazole, flusulfamide, flutolanil, flutriafol, folpet, fosetyl-aluminium, fosetyl-sodium, fthalide, fuberidazole, furalaxyl, furametpyr, furcarbonil, furconazole, furconazole-cis, furmecyclox,
guazatine,
hexachlorobenzene, hexaconazole, hymexazole,
imazalil, imibenconazole, iminoctadine, iminoctadine albesilate, iminoctadine triacetate, iodocarb, ipconazole, iprobenfos (IBP), iprodione, irumamycin, isoprothiolane, isovaledione,
kasugamycin, kresoxim-methyl, copper preparations, such as: copper hydroxide, copper naphthenate, copper oxychloride, copper sulphate, copper oxide, oxine-copper and Bordeaux mixture,
mancopper, mancozeb, maneb, meferimzone, mepanipyrim, mepronil, metalaxyl, metconazole, methasulfocarb, methfuroxam, metiram, metomeclam, metsulfovax, mildiomycin, myclobutanil, myclozolin,
nickel dimethyldithiocarbamate, nitrothal-isopropyl, nuarimol,
ofurace, oxadixyl, oxamocarb, oxolinic acid, oxycarboxim, oxyfenthiin,
paclobutrazole, pefurazoate, penconazole, pencycuron, phosdiphen, picoxystrobin, pimaricin, piperalin, polyoxin, polyoxorim, probenazole, prochloraz, procymidone, propamocarb, propanosine-sodium, propiconazole, propineb, pyraclostrobin, pyrazophos, pyrifenox, pyrimethanil, pyroquilon, pyroxyfur,
quinconazole, quintozene (PCNB),
sulphur and sulphur preparations,
tebuconazole, tecloftalam, tecnazene, tetcyclacis, tetraconazole, thiabendazole, thicyofen, thifluzamide, thiophanate-methyl, thiram, tioxymid, tolclofos-methyl, tolylfluanid, triadimefon, triadimenol, triazbutil, triazoxide, trichlamide, tricyclazole, tridemorph, trifloxystrobin, triflumizole, triforine, triticonazole, triticonazole,
uniconazole,
validamycin A, vinclozolin, viniconazole,
zarilamide, zineb, ziram and also
Dagger G,
OK-8705,
OK-8801,
.alpha.-(1,1-dimethylethyl)-.beta.-(2-phenoxyethyl)-1H-1,2,4-triazole-1-et- hanol, .alpha.-(2,4-dichlorophenyl)-.beta.-fluoro-.beta.-propyl-1H-1,2,4-t- riazole-1-ethanol, .alpha.-(2,4-dichlorophenyl)-.beta.-methoxy-.alpha.-methyl-1H-1,2,4-triaz- ole-1-ethanol, .alpha.-(5-methyl-1,3-dioxan-5-yl)-.beta.-[[4-(trifluoromethyl)-phenyl]-m- ethylene]-1H-1,2,4-triazole-1-ethanol,
(5RS,6RS)-6-hydroxy-2,2,7,7-tetramethyl-5-(1H-1,2,4-triazol-1-yl)-3-octano- ne, (E)-.alpha.-(methoxyimino)-N-methyl-2-phenoxy-phenylacetamide,
I-isopropyl {2-methyl-1-[[[1-(4-methylphenyl)-ethyl]-amino]-carbonyl]-propy-1}-carbamate,
1-(2,4-dichlorophenyl)-2-(1H-1,2,4-triazol-1-yl)-ethanone-O-(phenylmethyl)- -oxime, 1-(2-methyl-1-naphthalenyl)-1H-pyrrol-2,5-dione,
1-(3,5-dichlorophenyl)-3-(2-propenyl)-2,5-pyrrolidindione,
1-[(diiodomethyl)-sulphonyl]-4-methylbenzene,
1-[[2-(2,4-dichlorophenyl)-1,3-dioxolan-2-yl]-methyl]-1H-imidazole,
1-[[2-(4-chlorophenyl)-3-phenyloxiranyl]-methyl]-1H-1,2,4-triazole,
1-[1-[2-[(2,4-dichlorophenyl)-methoxy]-phenyl]-ethenyl]-1H-imidazole,
1-methyl-5-nonyl-2-(phenylmethyl)-3-pyrrolidinole,
2',6'-dibromo-2-methyl-4'-trifluoromethoxy-4'-trifluoromethyl-1,3-thiazole- -5-carboxanilide,
2,2-dichloro-N-[1-(4-chlorophenyl)-ethyl]-1-ethyl-3-methyl-cyclopropanecar- boxamide,
2,6-dichloro-5-(methylthio)-4-pyrimidinyl-thiocyanate,
2,6-dichloro-N-(4-trifluoromethylbenzyl)-benzamide,
2,6-dichloro-N-[[4-(trifluoromethyl)-phenyl]-methyl]-benzamide,
2-(2,3,3-triiodo-2-propenyl)-2H-tetrazole,
2-[(1-methylethyl)-sulphonyl]-5-(trichloromethyl)-1,3,4-thiadiazole,
2-[[6-deoxy-4-O-(4-O-methyl-.beta.-D-glycopyranosyl)-.alpha.-D-glucopyrano- syl]-amino] -4-methoxy-1H-pyrrolo[2,3-d]pyrimidine-5-carbonitrile,
2-aminobutane,
2-bromo-2-(bromomethyl)-pentanedinitrile,
2-chloro-N-(2,3-dihydro-1,1,3-trimethyl-1H-inden-4-yl)-3-pyridinecarboxami- de,
2-chloro-N-(2,6-dimethylphenyl)-N-(isothiocyanatomethyl)-acetamide,
2-phenylphenol (OPP),
3,4-dichloro-1-[4-(difluoromethoxy)-phenyl]-1H-pyrrol-2,5-dione,
3,5-dichloro-N-[cyano[(1-methyl-2-propynyl)-oxy]-methyl]-benzamide,
3-(1,1-dimethylpropyl)-1-oxo-1H-indene-2-carbonitrile,
3-[2-(4-chlorophenyl)-5-ethoxy-3-isoxazolidinyl]-pyridine,
4-chloro-2-cyano-N,N-dimethyl-5-(4-methylphenyl)-1H-imidazole-1-sulphonami- de,
4-methyltetrazolo [1,5-a]quinazolin-5(4H)-one,
8-(1,1-dimethylethyl)-N-ethyl-N-propyl-1,4-dioxaspiro[4.5]decane-2-methana- mine,
8-hydroxyquinoline sulphate,
9H-xanthene-2-[(phenylamino)-carbonyl]-9-carboxylic hydrazide,
bis-(1-methylethyl)-3-methyl-4-[(3-methylbenzoyl)-oxy]-2,5-thiophenedicarb- oxylate, cis-1-(4-chlorophenyl)-2-(1H-1,2,4-triazol-1-yl)-cycloheptanol,
cis-4-[3-[4-(1,1-dimethylpropyl)-phenyl-2-methylpropyl]-2,6-dimethylmorpho- line hydrochloride,
ethyl [(4-chlorophenyl)-azo]-cyanoacetate,
potassium bicarbonate,
methanetetrathiol-sodium salt,
methyl 1-(2,3-dihydro-2,2-dimethyl-1H-inden-1-yl)-1H-imidazole-5-carboxyla- te,
methyl N-(2,6-dimethylphenyl)-N-(5-isoxazolylcarbonyl)-DL-alaninate,
methyl N-(chloroacetyl)-N-(2,6-dimethylphenyl)-DL-alaninate,
N-(2,3-dichloro-4-hydroxyphenyl)-1-methyl-cyclohexanecarboxamide,
N-(2,6-dimethylphenyl)-2-methoxy-N-(tetrahydro-2-oxo-3-furanyl)-acetamide,
N-(2,6-dimethylphenyl)-2-methoxy-N-(tetrahydro-2-oxo-3-thienyl)-acetamide,
N-(2-chloro-4-nitrophenyl)-4-methyl-3-nitrobenzenesulphonamide,
N-(4-cyclohexylphenyl)-1,4,5,6-tetrahydro-2-pyrimidinamine,
N-(4-hexylphenyl)-1,4,5,6-tetrahydro-2-pyrimidinamine,
N-(5-chloro-2-methylphenyl)-2-methoxy-N-(2-oxo-3-oxazolidinyl)-acetamide,
N-(6-methoxy)-3-pyridinyl-cyclopropanecarboxamide,
N-[2,2,2-trichloro-1-[(chloroacetyl)-amino]-ethyl]-benzamide,
N-[3-chloro-4,5-bis(2-propinyloxy)-phenyl]-N'-methoxymethanimidamide,
N-formyl-N-hydroxy-DL-alanine-sodium salt,
O,O-diethyl [2-(dipropylamino)-2-oxoethyl]-ethylphosphoramidothioate,
O-methyl S-phenyl phenylpropylphosphoramidothioate,
S-methyl 1,2,3-benzothiadiazole-7-carbothioate,
spiro[2H]-1-benzopyrane-2,1'(3'H)-isobenzofuran]-3'-one,
4-[3,4-dimethoxyphenyl-3-(4-fluorophenyl)-acryloyl]-morpholine

### Bactericides:

bronopol, dichlorophen, nitrapyrin, nickel dimethyldithiocarbamate, kasugamycin, octhilinone, furancarboxylic acid, oxytetracyclin, probenazole, streptomycin, tecloftalam, copper sulphate and other copper preparations.

### Fertilizers:

Fertilizer components which may be used are organic and inorganic nitrogen-containing compounds such as urea, urea-formaldehyde condensation products, amino acids, ammonium salts and nitrates, and also potassium salts (preferably chlorides, sulphates, nitrates) and phosphoric acid and/or salts of phosphoric acids (preferably potassium salts and ammonium salts). The fertilizers may also contain salts of micronutrients (preferably manganese, magnesium, iron, boron, copper, zinc, molybdenum and cobalt) and phytohormones (e.g. vitamin B1 and indole-III-acetic acid). The commercially available complete fertilizers are preferably employed.

The principal fertilizer constituents, nitrogen, potassium and phosphorus, can be varied within wide limits. It is conventional to use contents of from 1 to 30% of nitrogen (preferably from 5 to 20%), from 1 to 20% of potassium (preferably from 3 to 15%) and from 1 to 20% of phosphorus (preferably from 3 to 10%). The contents of microelements are usually in the ppm range, preferably from 1 to 1000 ppm.

The fertilizer may include adhesives of which may be mentioned tackifiers such as carboxymethylcellulose, natural and synthetic polymers in the form of powders, granules or latices, polyvinylpyrrolidone, vinylpyrrolidone-styrene copolymers, vinylpyrrolidon-vinylacetat copolymers, polyethyleneglycols or inorganic adhesives such as gypsum or cement. They are present in the mixture in concentrations of from 1 to 30% by weight, preferably from 2 to 20% by weight.

Suitable solid carrier materials are, for example, natural ground minerals such as kaolins, aluminas, talc, chalk, quartz, attapulgite, montmorillonite or diatomaceous earth and synthetic ground minerals such as highly dispersed silicic acid, aluminium oxide and silicates, in addition calcium-phosphates and calcium-hydrogen-phosphates. Suitable solid carrier materials for granules are, for example, crushed and fractionated natural minerals such as calcite, marble, pumice, sepiolite, dolomite and synthetic granules of inorganic and organic ground materials, and also granules of organic material such as sawdust, coconut husks, corn cobs and tobacco stalks.

Further auxiliaries for the preparation of the fertilizers may include disintegrants and surfactants.

Disintegrants are employed in order to promote the release of the active substance in the soil. Corn starch, crosslinked polyvinylpyrrolidone and specific celluloses may be used individually or in combination. The disintegrants are present in concentrations of from 1 to 20% by weight, preferably from 3 to 10% by weight.

Surfactants may be employed in order to improve the biological activity of the active substance by solubilization; their content is between 1 to 10% by weight, preferably from 2 to 5% by weight. Nonionic surfactants of the alkyl-aryl-ethoxylate type are appropriate.

Where fertilizers are employed, the mixtures of insecticidally active substance, fertilizers, adhesive, auxiliary and inert substances may be mixed intensively and compressed by an extruder into granule or tablet form. It is also possible to first produce tablets or granules which are free from active substance and to coat these sticks or tablets, in a second step, with a solution of the active substance. This subsequent coating operation can also be used with advantage to apply active substance to fertilizer granules for example.

The active compound content of the use forms prepared from the commercially available formulations can vary within wide limits. The active compound concentration of the use forms can be from 0.0000001 to 95% by weight of active compound, preferably between 0.0001 and 1% by weight.

### Pests Controlled:

The active compound mixtures are suitable for combating animal pests, in particular insects, arachnids and nematodes, encountered in agriculture, in forestry, in the protection of stored products and of materials, and in the hygiene field, and have good plant tolerance and favorable toxicity to warm-blooded animals. They are active against normally sensitive and resistant species and against all or some stages of development.

The abovementioned pests include but are not limited to:
From the order of the Isopoda, for example, Oniscus asellus, Armadillidium vulgare and Porcellio scaber.

From the order of the Diplopoda, for example, Blaniulus guttulatus.

From the order of the Chilopoda, for example, Geophilus carpophagus and Scutigera spec.

From the order of the Symphyla, for example, Scutigerella eustria.

From the order of the Thysanura, for example, Lepisma saccharina.

From the order of the Collembola, for example, Onychiurus armatus.

From the order of the Orthoptera, for example, Blatta orientalis, Periplaneta ÿ eustria ÿ, Leucophaea maderae, Blattella germanica, Acheta domesticus, Gryllotalpa spp., Locusta migratoria migratorioides, Melanoplus differentialis and Schistocerca gregaria.

From the order of the Dermaptera, for example, Forficula auricularia.

From the order of the Isoptera, for example, Reticulitermes spp.

From the order of the Anoplura, for example, Pediculus humanus corporis, Haematopinus spp. and Linognathus spp.

From the order of the Mallophaga, for example, Trichodectes spp. And Damalinea spp.

From the order of the Thysanoptera, for example, Hercinothrips femoralis and Thrips tabaci, frankliniella,

From the order of the Heteroptera, for example, Eurygaster spp., Dysdercus intermedius, Piesma quadrata, Cimex lectularius, Rhodnius prolixus and Triatoma spp.

From the order of the Homoptera, for example, Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Phylloxera vastatrix, Pemphigus spp., Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. And Psylla spp.

From the order of the Lepidoptera, for example, Pectinophora gossypiella, Bupalus piniarius, Cheimatobia brumata, Lithocolletis blancardelia, Hyponomeuta padella, Plutella maculipennis, Malacosoma eustria, Euproctis chrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima and Tortrix viridana.

From the order of the Coleoptera, for example, Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis and Costelytra zealandica, including grubs and billbugs.

From the order of the Hymenoptera, for example, Diprion spp., Hoplocampa spp., Lasius spp., Monomorium pharaonis and Vespa spp., Symphyta including sawflies.

From the order of the Diptera, for example, Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae and Tipula paludosa, Liriomyza spp.

From the order of the Siphonaptera, for example, Xenopsylla cheopis and Ceratophyllus spp.

From the order of the Arachnida, for example, Scorpio maurus and Latrodectus mactans.

From the order of the Acarina, for example, Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp.

The plant-parasitic nematodes include Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp., belanoliamas.

Other genera include Popillia, Cyclocephala, Cotinus, Anomala, Maladera, Ataenius, Phyllophaga, Sphenophorus, Listronotus, Tomarus, Rhizotrogus, Diaprepes, and Otiorhynchus.

Certainly, any insects known to be controllable with imidacloprid are within the scope of the present invention.

The following examples further illustrate the present invention, but, of course, should not be construed as in any way limiting its scope.

### EXAMPLES

### Example 1 - A Test of the Leaching Characteristics of A Tablet and Dry Granular Formulation According to the Present Invention Versus The Leaching Characteristics Of A Liquid Drench

Soil Column Preparation:
A soil column formulation release experiment was conducted to investigate the release characteristics of imidacloprid from a tablet and a dry granular formulation, relative to a conventional liquid drench application.
Several soil columns were prepared consisting of PVC tubes approximately 45 cm long, with an inner diameter of approximately 30 cm. The columns were closed at the lower end with glass wool, followed by a 2-cm deep layer of sand at the bottom. Each column was dry packed with soil in one step to a height of 15 cm while gently vibrating or shaking. The soil columns were then saturated with an upward flow of 0.01 M CaCl₂ solution to minimize air entrapment in soil pores. After a soaking period of one hour, the excess solution was allowed to drain overnight.

Introduction of imidacloprid to the soil columns:
Separate applications of imidacloprid were introduced to each soil column under the following conditions - a) application of imidacloprid as a tablet formulation (tablel size was 2.5 grams of which 20% was the active ingredient (a.i.) giving a total of 500 mg a.i.), at 5 cm depth with 3 and 6 irrigation events, b) application of imidacloprid as a dry granule application (500 mg a.i, 70% a.i) at 5 cm depth, and c) application of imidacloprid as a drench application (500 mg a.i./column, with the imidacloprid dissolved in 30 ml water to simulate a standard treatment).
Simulated rain was applied to the each of these soil columns over a period of 6 weeks.

Sample Collection:
The leachates were collected as fractions, and the leachates were analyzed for the presence of imidacloprid using GLC-MS methodology.

Results:
Based on the data gathered from GLC-MS analysis, very significant differences in imidacloprid content were detected in water samples taken from the three different forms of application (namely as a tablet, as a dry granule or as a drench).
Water samples taken from water that passed through a soil column containing the imidacloprid tablet formulation contained (accumulated) approx. 5-10 times less imidacloprid than corresponding water samples taken from soil columns treated with the dry imidacloprid granule as a point source, and approximately 200 times less imidacloprid was found in the water samples of soil columns which received the imidacloprid tablet application compared to water samples taken from columns receiving receiving the imidacloprid soil drench application.

### Example 2 - Comparison of the Leaching Characteristics of Imidacloprid as a 30% Gel, a 40% Gel, A 70% Granule and a 5% Tablet Versus A Liquid Drench.

### Soil Column Preparation

Sixteen soil columns were prepared as follows.

The organic layer from underneath old growth hemlocks was collected from the Shenipsit State Forest (Somers, CT).

The organic soil (∼540 g) was packed into columns constructed from PVC pipe (52 mm I.D.), to fill a volume of 490 ml, or a soil depth of 23 cm. Each column was constructed from 2 pieces, each 15 cm long. When assembled, these two pieces were held together with duct tape wrapped around the exterior of the column. Aluminum window screen was glued to the bottom of each column, and a piece of Scotchbrite scouring pad was cut to fit within the column and was placed on top of the screen, to hold the soil within the column. Ports were drilled into the side of each column, positioned at 2, 17, and 22 cm from the bottom of the respective column. A 6.4 mm diameter tube, predrilled with several 2 mm diameter holes, was inserted through the width of the column for each port. When the column was filled with soil, these ports allowed removal of soil solution at 5, 10, and 25 cm below the depth at which imidacloprid had been loaded. There were 16 columns constructed, enough to randomize three replicates of 5 treatments, plus one soil blank.

### Introduction of Imidacloprid to the Soil Columns

Imidacloprid formulations included a liquid soil treatment (a liquid drench - the commercial standard), and four controlled-release formulations, namely a 30% gel (Formulation No. 8373/0149), a 40% gel (Formulation No. 8373/0148), a 70% dry granule (Formulation No. 9007/1127), and a 5% tablet (Formulation No. 356150).

Imidacloprid was loaded onto the column at a dosage equivalent to 1 g a.i. n⁻², which translated to 2.1 mg active ingredient per column.

For the liquid soil treatment application, a soil injection was simulated by diluting the product in 10 ml of water, and drenching the suspension onto the soil surface in the column.

The gel formulations were applied by weighing the desired amount of product on aluminum foil, and the foil was cut into thin strips (1 - 2 mm wide) and the resulting strips were placed on the soil surface.

The tablet formulation was simply placed on the top of the column.

All treatments were covered with a thin layer of soil after application, which was approximately one cm of soil added (to simulate a shallow subsurface field application).

### Sample Generation and Collection

Syringes (60 ml) were used for extracting soil solution; one syringe was kept for each port. Mostly air was withdrawn, but a large rubber stopper placed on top of the column was used to increase the efficiency in drawing out the water sample. The columns were left with an air gap so that they could drip into a bottom Petri dish (rather than sitting in a dish filled with leachate). If it was too difficult to draw a water sample from the 20 cm depth port, then the sample was taken from the leachate caught in this Petri dish (after all, the sample had to travel past the collection port depth to get to the bottom of the column). On each work day (Monday through Friday) for two weeks, 54 ml of water were added at the top of each column at 8:30 a.m. (simulating 1" of precipitation). The water was allowed to percolate through the soil until 1:00 p.m., at which time soil solution samples were taken, stored in 1.5 ml microcentrifuge tubes, and frozen. In total, 4 samples were obtained.

### Sample Analysis

The samples were analyzed using the EnviroLogix EP-006 Imidacloprid Quantiplate Kits. The samples were diluted at least 1:20 prior to analysis to avoid matrix effects, and three sets of standards for the kit (0.2, 1, and either 5 or 6 ppb) were run on each 96 well plate to confirm good stability across the ELISA plate. Plates were read with a TiterTek ELISA plate reader. Regressions for the standard curves generally had **R²** = 0.98% or better. Concentrations of the original samples were calculated from the measured optical density, using the standard curve, and the dilution factor used in setting up the ELISA test.

### Results

The gel and tablet formulations clearly decreased the leaching potential of imidacloprid in these columns when compared with the standard liquid drench product. Imidacloprid applied as a 70% granular formulation moved down the column less readily, but the movement was greater than observed for the gels and the tablet. Within the first two weeks, concentrations of imidacloprid for the gel and tablet formulations never exceeded 10 ppb in soil solution, even at 5 cm below the soil level at which they had been applied. The concentration of imidacloprid at this depth was greater than 100 ppb with the liquid application and the dry 70% granule, but the concentration at 14 days after treatment exceeded 500 ppb for the liquid standard application, while the concentration was less than 200 ppb with the 70% dry granule.

More particularly, referring to Figs 4 through 8 there are shown a series of graphs of the imidacloprid concentration (in ppb along the Y axis) versus days after application (X axis) as measured at a depth of 5 cm (Line A), 10 cm (Line B), and 25 cm (Line C). Fig. 4 is directed to the 30% gel formulation, Fig. 5 is directed to the 40% gel formulation, Fig. 6 is directed to the 70% granule formulation and Fig. 7 is directed to the 5% tablet formulation. Fig. 8 is directed to a Simulated Kioritz delivery.

The pattern shown in these Figs 4 through 7 versus Fig. 8 illustrates that the active ingredient does not leach through the column as readily, and the release of the imidacloprid in the soil was lower and was therefore controllably released. Less imidacloprid was released in Figs 4-7 to the soil over that of Fig. 8. And much less was found deep in the column, illustrating that the leaching was controlled.

### Example 3 - Demonstration of Effectiveness of the 30% Gel, 40% Gel, 70% Granule and 5% Tablet Against Whitefly on Kidney Bean Plants

A bioassay was performed where kidney bean seeds were planted in potting media (Sunshine Mix) containg 4 mg per plant of imidacloprid active ingredient. Minimal numbers of pieces of the tablet formulation were used to preserve the physical aspects of its control release characteristics. The beans were then grown in a greenhouse in an area surrounded by older bean plants heavily infested with whiteflies. Four leaf disks were cut from the first trifoliate leaf with a #5 cork borer 25 days after planting, and the number of eggs from each leaf disk was recorded. The data were as follows.

| Formulation No | Form | % active | Avg. ppb | Avg. No. of Whitefly Eggs |
|---|---|---|---|---|
| 356150 | Tablet | 5% | 2.1 ppb b | 5.5 b |
| 9007/1127 | Granule | 70% | 5.2 ppb ab | 6.5 b |
| 8373/0149 | Gel | 30% | 2.6 ppb b | 2.0 b |
| 8373/0148 | Gel | 40% | 7.1 ppb a | 8.0 b |
| Merit 75 W | Powder | 75% | 3.5 ppb ab | 1.5 b |
| Blank Soil | None | None | None b | 54.0 a |

Clearly, the 54 eggs on the control versus the number of eggs with each of the table, granule and gel formulations illustrates the effectiveness of the present invention. Also, it was found in this experiment that in looking at leachate data, none of the formulations were overly mobile in the organic soil, including the Merit 75 W, indicating the risk of leaching to unintended locations is minimal.

### Example 4 - Demonstration of Effectiveness of the 30% Gel , 70% Granule and 20% Tablet Against Lacebug on Shrubs

### Methods and Materials

A bioassay was performed of the effectiveness of the present invention on shrubs infested with lacebug.

Shrubs were grown in a 5 x 8 foot spacing within the field, in a silt loam soil (8.5% organic matter; pH of 5.5; sand, 35.8%; silt, 55%; clay, 9.2%). Shrubs (4 - 7 ft tall) chosen for the study were separated by at least two other untreated shrubs to guarantee isolation of treatment effects. The cumulative stem diameter was measured to the nearest 0.25 inch, and the quantity of imidacloprid active ingredient calculated on the basis of 0.75 g active ingredient per basal caliper inch. The experiment was designed with single shrubs as the experimental unit, and a linear randomized complete block design with 6 replicates.

The tested formulations and controls listed below were applied on March 31^{st} , 2006 under 75°F and sunny conditions. Shovel slits were made 4 inches deep within 10 inches of the base of each shrub in the four cardinal directions, product was placed within these slits, and then the slits were closed with the operator's foot pressure.

Lacebug populations were evaluated on 5 May 2006 and 14 May 2007 by doing a 2-min timed count of lacebug adults on each treated and check shrub. In 2007, 10 6-inch shoots were taken from each shrub and the eggs counted. Data were treated as a completely randomized design in the analysis of variance following log (x+1) transformation to establish homogeneous variances. Non-transformed means are reported, whereas the mean separations were performed on log-transformed data.

### Results and Discussion

*2006 Results.* Following data trimming, there was a significant difference between treatments (P = 0.034) in 2006. Two treatments, the liquid soil injection and the tablet formulation were significantly different from the untreated check, with 97 and 89 percent reductions in the numbers of bugs. The remaining treatments had intermediate counts that were not significantly different from either the check or the Merit 2F treatment.

| Treatment | Formulation concentration | Dosage | No. Bugs |
|---|---|---|---|
| Untreated | - | - | 29.3 ab |
| Tablet | 20% | 3.75 g/in | 3.3 b |
| Dry Granule | 70% | 1.07 g/in | 23.0 ab |
| Gel | 0.352 g/ml | 2.13 ml/in | 24.3 a |
| Liquid soil injection | 240 g/ml | 3.13 ml/in | 1.0 b |

Means followed by the same letter are not significantly different, P = 0.05, LSD test. *2007 Results.* There were significant differences between treatments and the untreated check (P = 0.005), and no statistical differences among the tested formulations. All formulations provided excellent control. The differences between the 2006 and 2007 data indicate that the gel and the dry granule formulations took longer to release the active ingredient than did the liquid application, but the formulations were effective.

| Treatment | Formulation concentration | Dosage | Adults | Eggs |
|---|---|---|---|---|
| Untreated | - | - | 29.2 a | 115 a |
| Tablet | 20% | 3.75 g/in | 6.0 b | 9.2 b |
| Dry Granule | 70% | 1.07 g/in | 6.8 b | 8.5 b |
| Gel | 0.352 g/ml | 2.13 ml/in | 7.3 b | 8.8 b |
| Liquid soil injection | 240 g/ml | 3.13 ml/in | 5.2 b | 1.0 b |

Means followed by the same letter are not significantly different, P = 0.05, LSD test.

As may be seen from the foregoing, all of the controlled-release formulations in the above table are releasing sufficient insecticide to be biologically active. The 5% tablet and the 30% gel were found to best minimize leaching potential. The insecticide was found not to be moving down even to the 5 cm depth in any significant amounts. It may be noted that a) ELISA results were not yet run in some instances; and b) ELISA results exceeding the maximum standard curve concentration have not been retested as a diluted sample to obtain the valid result, therefore the ppb concentrations reported above are conservative.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A method of applying a insecticidally active ingredient in point source form with controlled leaching of the insecticidally active ingredient comprising the steps of:
a) pelletizing the an insecticidally active ingredient into substantially uniform pellets;
b) providing a dibble with a handle end and a distal working end and a pellet dispensing member attached thereto having a dispensing end adjacent the distal working end;
c) introducing said pelletized insecticidally active ingredient into the pellet dispensing member; and
d) selectively dispensing the pelletized insecticidally active ingredient from the pellet dispensing member.

2. The method of applying insecticidally active ingredient according to Claim 1 wherein the step of providing the pelletized insecticidally active ingredient within the pellet dispensing member comprises feeding, optionally by hand feeding, the pellets into the pellet dispensing member which is a gravity feeding dispensing unit.

3. The method of applying insecticidally active ingredient according to Claim 2 wherein the gravity feeding dispensing unit includes a funnel top member and an elongated dispensing tube.

4. The method of applying insecticidally active ingredient according to Claim 3 wherein the gravity feeding dispensing unit further includes a releasing actuator, wherein the selective dispensing of the pelletized insecticidally active ingredient from the pellet dispensing member is through actuation of the releasing actuator.

5. The method of applying insecticidally active ingredient according to Claim 4 wherein the releasing actuator of the gravity feeding dispensing unit further includes a unit dosage measurement mechanism, whereby when actuated the releasing actuator releases only a single dosage of pellets.

6. The method of applying insecticidally active ingredient according to Claim 1 wherein the step of introducing the pelletized insecticidally active ingredient into the pellet dispensing member includes a supply of multiple dosages of pellets within the pellet dispensing member wherein the pellet dispensing member serves as a hopper for storage of the pellets until the pellets are dispensed.

7. The method of Claim 1 wherein the pellets are in the range of about 5 grams to about 20 grams.

8. The pellet dispensing member for dispensing pellets in accordance with Claim 1.
